# EUROPÄISCHE PATENTANMELDUNG

(11) **EP 3 287 338 A1**
(43) Veröffentlichungstag der Anmeldung: **28.02.2018**
(21) Anmeldenummer: 16185270.2
(22) Anmeldetag: 23.08.2016
(51) Int. Cl.: B61L 25/02, G01C 21/32

(54) **VERFAHREN ZUR ERSTELLUNG EINES DIGITALEN GLEISPLANS EINER GLEISANLAGE**

(71) Anmelder: OMV REFINING & MARKETING GMBH, 1020 Wien (AT)
(72) Erfinder: HERNETH, Christian, 1020 Wien (AT); NOVAK, Martin, 1230 Wien (AT)
(74) Vertreter: Sonn & Partner Patentanwälte

(57) **Zusammenfassung**

Verfahren, Computersystem und Computerprogramm zur Erstellung eines digitalen Gleisplans einer Gleisanlage, wobei von mit zumindest einem Empfänger für satelliten- und/oder landgestützten Positionssignale erfasste Positionsdaten (Pgeo) zu jeweils einem Punkt (x,y) in einem Raster, welches die Fläche der Gleisanlage überspannt, zugeordnet werden, wobei für jeden Punkt (x,y) des Rasters die Anzahl der jeweils zugeordneten Positionsdaten (Pgeo) ermittelt wird; und wobei ein digitaler Gleisplan aus mehreren Punkten (x,y) des Rasters unter Berücksichtigung der jedem Punkt (x,y) zugeordneten Anzahl von erfassten Positionsdaten (Pgeo) rekonstruiert wird.

## Beschreibung

Die Erfindung betrifft ein Verfahren, insbesondere ein computerimplementiertes Verfahren, sowie ein Computersystem und ein Computerprogramm zur Erstellung eines digitalen Gleisplans einer Gleisanlage.

Die Gleisanlage kann dabei die Gleise oder Gleiselemente eines Bahnhofs (insbesondere Rangierbahnhofs), eines Containerterminals, einer Hafenanlagen, einer Schienenanlage auf Forstwegen oder im Tagebau, und/oder eines allgemeinen Schienenverlaufs umfassen.

Für eine möglichst effiziente Planung und Organisation von Schienenverkehr auf einer Gleisanlage ist eine genaue Kenntnis der aktuellen Position aller Teilnehmer (insbesondere Zug- und Lastfahrzeuge) im Bezug auf die Gleisanlage erforderlich. Voraussetzung dafür ist ein präziser und aktueller Gleisplan (d.h. im Wesentlichen Kartenmaterial der Gleisanlage). Allgemein verfügbares Kartenmaterial ist meistens nicht ausreichend präzise und zudem ist dessen Aktualität von der regelmäßigen Inanspruchnahme kostenintensiver geodätischer Hilfsdienst abhängig, welche sich darüber hinaus negativ auf den laufenden Betrieb auswirken und diesen stören oder behindern. Eine effizientere Methode zur Erstellung bzw. Aktualisierung eines Gleisplans einer Gleisanlage ist daher wünschenswert.

Die EP 1 966 026 B1 zeigt ein Verfahren, bei dem ein Gleisplan aus Linien- und Weichenelementen auf Basis eines Luftbilds und/oder auf Basis mittels GPS erfasster Positionsdaten erstellt wird. Im letzteren Fall wird zur Erfassung der Positionsdaten eine speziell ausgestattete Lokomotive zumindest einmal über alle Gleissegmente geführt. Anschließend wird der Gleisplan direkt aus den erfassten Positionsdaten ermittelt, indem Liniensegmente an die Positionsdaten angepasst ("gefittet") werden. Diese Vorgehensweise hat den Nachteil, dass es während der Aufzeichnung der Positionsdaten zu negativen Auswirkungen auf den Betrieb kommen kann, weil die speziell ausgestattete Lokomotive in einem für den Betrieb untypischen Bewegungsmuster einmal über alle Gleissegmente geführt werden muss.

Es ist eine Aufgabe der Erfindung, ein Verfahren, ein Computersystem und ein Computerprogramm vorzuschlagen, mit dem diese negativen Auswirkungen verringert werden können.

Die genannte Aufgabe kann erfindungsgemäß mit einem Verfahren der eingangs angeführten Art gelöst werden, wobei das Verfahren die folgenden Schritte umfasst: Zuordnen von mit einem Empfänger für satelliten- und/oder landgestützten Positionssignale erfassten Positionsdaten zu jeweils einem Punkt in einem Raster, welches die Fläche der Gleisanlage überspannt, wobei für jeden Punkt des Rasters die Anzahl der jeweils zugeordneten Positionsdaten ermittelt wird; und Rekonstruieren eines digitalen Gleisplans aus mehreren Punkten des Rasters unter Berücksichtigung der jedem Punkt zugeordneten Anzahl von erfassten Positionsdaten. Der Schritt des Rekonstruierens kann dabei das Erkennen zumindest eines Gleisobjekts (Gerade, Kurve, Weiche, etc.) und das Rekonstruieren zumindest eines Gleisverlaufs (z.B. der Mittellinie einer Gerade oder eines Kurvenelements) umfassen.

In entsprechender Weise wird die oben genannte Aufgabe durch ein Verfahren der eingangs angeführten Art und umfassend die folgenden Schritte gelöst: Erfassen von Positionsdaten mit einem Empfänger für satelliten- und/oder landgestützten Positionssignale; Zuordnen der erfassten Positionsdaten zu jeweils einem Punkt in einem Raster, welches die Fläche der Gleisanlage überspannt, wobei für jeden Punkt des Rasters die Anzahl der jeweils zugeordneten Positionsdaten ermittelt wird; und Rekonstruieren (gemäß der obigen Definition) eines digitalen Gleisplans aus mehreren Punkten des Rasters unter Berücksichtigung der jedem Punkt zugeordneten Anzahl von erfassten Positionsdaten.

In einer bevorzugten Variante können negative Auswirkungen auf den Betrieb der Gleisanlage gänzlich vermieden werden, wenn die Erfassung der Positionsdaten durch einen Empfänger erfolgt, der auf einem Fahrzeug angebracht ist, welcher am normalen Betrieb teilnimmt.

Entsprechend den obigen Verfahren kann zur Lösung der genannten Aufgabe erfindungsgemäß ein Computersystem zur Erstellung eines digitalen Gleisplans einer Gleisanlage bereitgestellt werden, welches folgende Elemente umfasst: Zuordnungsmittel zum Zuordnen von empfangenen, insbesondere mit einem Empfänger für satelliten- und/oder landgestützten Positionssignale erfassten, Positionsdaten zu jeweils einem Punkt in einem Raster, welches die Fläche der Gleisanlage überspannt, wobei für jeden Punkt des Rasters die Anzahl der jeweils zugeordneten Positionsdaten ermittelt wird; und Rekonstruktionsmittel zum Rekonstruieren eines digitalen Gleisplans (wie oben definiert) aus mehreren Punkten des Rasters unter Berücksichtigung der jedem Punkt zugeordneten Anzahl von erfassten Positionsdaten.

Schließlich kann zur Lösung der genannten Aufgabe erfindungsgemäß ein Computerprogramm oder Computerprogrammprodukt vorgesehen sein, das direkt in den internen Speicher eines digitalen Computers geladen werden kann und Softwarecodeabschnitte umfasst, mit denen die Schritte nach dem erfindungsgemäßen Verfahren ausgeführt werden, wenn das Computerprogramm auf einem Computer läuft. Das Computerprogramm kann insbesondere auf einem Computer-verwendbaren (lesbaren) Medium gespeichert sein, z.B. in einem permanenten oder transienten Speicher, einschließlich RAM, ROM, CD, DVD, BD, SSD, HDD oder Flash Speicher.

Die Zuordnung der Positionsdaten entspricht im Wesentlichen einer Kategorisierung, wobei die Kategorien die Punkte des Rasters sind. Der Gleisplan wird demnach aus den (vordefinierten) Kategorien und nicht aus den Messergebnissen (d.h. den Positionsdaten) ermittelt, wobei die Messergebnisse über die Anzahl der Zuordnungen zu den Kategorien in den Gleisplan eingehen.

Ein Vorteil der vorliegenden Erfindung liegt darin, dass sich aufgrund der Verwendung des Rasters die Datenmenge, von der die Rekonstruktion ausgeht, durch zusätzliche Positionsdaten nicht ändert. D.h. es können praktisch beliebig viele Positionsdaten berücksichtigt werden, ohne den Aufwand bei der Speicherung und Verarbeitung der solcherart kategorisierten Positionsdaten zu erhöhen. Bei Verfahren welche die Positionsdaten direkt verwenden erhöht sich der Speicheraufwand linear mit der Anzahl der berücksichtigten Positionsdaten und der Rechenaufwand bei der Rekonstruktion zumindest linear (z.B. quadratisch).

Vorzugsweise können die erfassten Positionsdaten jenem Punkt des Rasters zugeordnet werden, der den kleinsten geometrischen Abstand von der den Positionsdaten entsprechenden Position auf der Fläche der Gleisanlage aufweist. Diese Vorgehensweise ist auf jede beliebige Anordnung der Punkte des Rasters (kurz der Rasterpunkte) anwendbar, insbesondere auch auf ungleichmäßige und/oder nicht-lineare Anordnungen. Alternativ kann im Fall eines streng rechteckigen Rasters auch eine Zuordnung nach Spalten und Zeilen mit jeweils definierten Koordinatenbereichen vorgenommen werden.

Weiters ist es günstig, wenn jedem Punkt des Rasters ein Zähler zugeordnet ist, welcher mit jedem zugeordneten Positionsdatum inkrementiert wird. Dadurch kann im Fall von vielen wiederholten Fahrten (eines mit einem Empfänger ausgestattete Fahrzeugs) über dieselbe Gleisstrecke Messfehler, welche möglicherweise in Fehlzuordnungen resultieren, die Häufigkeit der Zuordnung zu bestimmten Rasterpunkten berücksichtigt werden, z.B. indem weniger häufige Zuordnungen als Ausreißer identifiziert und ignoriert oder unterdrückt werden.

In einer bevorzugten Ausführungsform des vorliegenden Verfahrens werden beim Rekonstruieren des digitalen Gleisplans Bereiche mit Gleisverzweigungen erkannt und die verbindenden Gleisabschnitte durch Anpassung von nicht-verzweigten Gleisobjekten rekonstruiert. Auf diese Weise kann automatisch ein Gleisplan sämtlicher einfacher Gleisobjekte (Gerade Gleiselemente oder Kurven) erstellt werden und es kann die Anzahl und Position von Gleisobjekten mit drei oder mehr Anschlüssen ermittelt werden. Auf dieser Grundlage kann anschließend durch Kombinatorik aller gängigen Gleisobjekttypen mit der jeweiligen Anzahl an Anschlüssen, gegebenenfalls eingeschränkt durch Vorgaben betreffend die vorhandenen Gleisobjekte, Typ und Lage der Gleisverzweigungen ermittelt und der Gleisplan entsprechend ergänzt werden.

In diesem Zusammenhang ist es günstig, wenn Punkte des Rasters mit einer höheren zugeordneten Anzahl von Positionsdaten bei der Anpassung (d.h. der Gleisobjekte) ein größeres Gewicht haben, sodass das angepasste Gleisobjekt zwischen zwei unterschiedlich gewichteten Punkten näher bei dem Punkt mit dem größeren Gewicht angeordnet ist. Auf diese Weise können einzelne Fehlzuordnungen zu tatsächlich von dem Gleisobjekt entfernten Rasterpunkten unterdrückt werden. Zugleich kann die Genauigkeit der Anpassung durch Berücksichtigung benachbarter Punkte mit einer vergleichbaren Anzahl von Zuordnungen verbessert werden (z.B. wenn ein Gleisobjekt in einem Grenzbereich zwischen zwei Rasterpunkten von beiden Punkten annähernd gleich weit entfernt ist). Grundsätzlich wird das solcherart angepasste Gleisobjekt zwischen zwei Punkten des Rasters einen geringeren Abstand zu jenem Punkt mit dem vergleichsweise größeren Gewicht aufweisen.

Es hat sich als günstig herausgestellt, wenn die Zuordnung der Positionsdaten während der Erfassung erfolgt. Die Positionsdaten selbst müssen in diesem Fall nicht bis zur Rekonstruktion des Gleisplans gespeichert werden und können bereits nach der Zuordnung gelöscht werden. Die von den Positionsdaten umfassten aufgezeichneten Koordinaten können demnach in einem Raster gesammelt und übertragen und/oder verarbeitet werden.

In einer bevorzugten Ausführungsform werden die Positionsdaten von dem Empfänger an ein zentrales Service übermittelt, wobei zumindest die Rekonstruktion des digitalen Gleisplans von dem zentralen Service durchgeführt wird. Dabei kann die Zuordnung der Positionsdaten zu den Punkten des Rasters lokal am Empfänger erfolgen, sodass nur die Zuordnungen übertragen werden, oder es können die Positionsdaten an das zentrale Service übermittelt und dort den Rasterpunkten zugeordnet werden. Eine lokale Zuordnung am Empfänger hat den Vorteil, dass eine geringere Datenmenge übertragen werden muss, insbesondere wenn Positionsdaten über einen längeren Zeitraum aufgezeichnet und dann gesammelt übertragen werden sollen.

Das vorliegende Verfahren eignet sich besonders für eine Verwendung, bei der Positionsdaten von zwei oder mehr Empfängern empfangen und in einem gemeinsamen Raster zusammenführt werden. Die Zusammenführung kann dabei auf einfache Weise durch Addieren der Zähler der zusammenzuführenden Raster erfolgen.

Die Positionsdaten können von dem Empfänger drahtlos, vorzugsweise über WiFi, ZigBee, NFC, GSM oder ISM, an das zentrale Service übermittelt werden. Besonders bevorzugt kann bei mehreren verfügbaren der beste Kommunikationsweg (z.B. nach Geschwindigkeit und/oder Energiebedarf) automatisch ausgewählt werden. Mit einer drahtlosen Übertragung können die Daten ohne Unterbrechung des Betriebs und vorzugsweise in Echtzeit, d.h. unmittelbar nach der Ermittlung, übermittelt werden.

Weiters hat es sich als vorteilhaft herausgestellt, wenn das Raster an den erstellten digitalen Gleisplan derart angepasst wird, dass eine gleichmäßige geometrische Verteilung der Punkte des Rasters entlang der Gleisobjekte und/oder eine höhere Dichte von Punkten in Bereichen von Gleisobjekten als in Bereichen ohne Gleisobjekte erzielt wird. Eine solche Anpassung kann iterativ erfolgen, wobei beispielsweise zunächst mit einem rechteckigen oder quadratischen Raster begonnen wird, welches nach und nach an den Verlauf der bereits erkannten Gleisobjekte angepasst wird. Beispielsweise können bei dem angepassten Raster Punkte in gleichmäßigen Abständen entlang einer Kurvenstrecke angeordnet sein. Die Verwendung eines angepassten Rasters hat den Vorteil, dass eine Abbildung der Punkte des Rasters in ein vereinfachtes Gleismodell (siehe unten) genauer ist. Insbesondere kann somit eine konstante Positionsgenauigkeit der auf das Raster abgebildeten Positionsdaten entlang der Gleisstrecke erzielt werden.

Im Zusammenhang mit der Rekonstruktion des digitalen Gleisplans ist es günstig, wenn Vorgaben zu den vorhandenen Gleisobjekten, insbesondere Arten und Anzahl der vorhandenen Kreuzungselemente (z.B. mit oder ohne Stellglieder, Weichen, etc.), berücksichtigt werden. Derartige Vorgaben können beispielsweise durch manuelle Eingabe vor oder während der Rekonstruktion erstellt werden oder aus einer Datenbank geladen werden. Eine manuelle Eingabe kann beispielsweise die Auswahl eines Kreuzungselements für einen automatisch erkannten Kreuzungsbereich (d.h. mit drei oder mehr Anschlüssen) umfassen, wobei eine Auswahl aus den automatisch ermittelten möglichen Optionen mit der passenden Anzahl an Anschlüssen erfolgen kann.

Darüber hinaus kann im Rahmen der Rekonstruktion eine manuelle Bearbeitung von Gleisobjekten ermöglicht werden. Dabei kann der Gleisplan beispielsweise durch Eingabe von Objekteigenschaften, wie Identifikationsnummern, Lage im Raum, Betriebsparameter u.a., durch einen Operator ergänzt werden. Außerdem können günstiger Weise anhand des erstellten Gleisplans die Grenzmarken und Gleisnutzlängen der rekonstruierten Gleisobjekte berechnet werden.

Es ist besonders vorteilhaft, wenn die Rekonstruktion zusätzlich zu den Punkten des Rasters (bzw. der jeweils zugeordneten Anzahl von Positionsdaten) einen oder mehrere vordefinierte Referenzpunkte berücksichtigt, welche die Position von Gleiselementen markieren. Die Referenzpunkte können beispielsweise geodätisch vermessenen Anfangs- und Endpunkten von Gleiselementen oder -abschnitten entsprechen. Den Referenzpunkten kann während einer Anpassung von Gleisobjekten ein Gewicht zugewiesen werden, welches invers proportional dem jeweils zugeordneten Vermessungsfehler (d.h. der Messungenauigkeit) ist.

Im Rahmen des vorliegenden Verfahrens kann vorzugsweise auf Basis des rekonstruierten digitalen Gleisplans ein topologisch verzerrtes, vollständiges, unmaßstäbliches Gleismodell der Gleisanlage ermittelt werden und es können für die Punkte des Rasters Abbildungsparameter ermittelt und gespeichert werden, die einer Abbildung der Punkte in dem Gleismodell entsprechen. Derartige Gleismodelle sind besonders übersichtlich und ermöglichen eine rasche Erfassung einer Verkehrssituation in einer Gleisanlage durch einen Operator. Durch die erzielte Vereinfachung wird in weiterer Folge z.B. die Planung und Vorhersage von Verschiebevorgängen erheblich erleichtert. Mithilfe der gespeicherten Abbildungsparameter kann im Betrieb die Genauigkeit der bekannten Fahrzeugpositionen auch bei nur ungenau gemessenen Positionen von Fahrzeugen durch Anpassung an den bekannten Gleisverlauf ("Snapping") verbessert werden. Im Einzelnen können die gemessenen (und gegebenenfalls korrigierten) Positionen einem Rasterpunkt zugeordnet und gemäß den gespeicherten Abbildungsparametern in das Gleismodell abgebildet und dort dem nächstliegenden Punkt auf einem Gleisobjekt zugeordnet werden.

Im Trackingbetrieb einlangende Geokoordinaten von Fahrzeugen in der Gleisanlage können auf diese Weise einem Gleisobjekt zugeordnet und einem etwaigen angeschlossenen Visualisierungs- oder Logistikleitsystem bezogen auf das Gleisobjekt und mit der relativen Position auf dem Gleisobjekt übermittelt werden. Diese Information kann von der geografischen Positionsinformation befreit und damit vollständig im Gleismodell erfolgen. Dies ist für die Darstellung für Bediener/Dispatcher/FDL und Ansteuerung von Prozessleitsystem interessant, da diese mit georeferenzierten Daten nichts anfangen.

Für das vorliegende Verfahren ist es günstig, wenn zusätzlich zur Erfassung von Positionsdaten mit dem Empfänger Positionskorrekturdaten (z.B. gemäß dem dGNSS-Verfahren) empfangen werden und die Positionsdaten auf Basis der empfangenen Positionskorrekturdaten korrigiert werden bevor die korrigierten Positionsdaten für die Zuordnung in dem Raster verwendet werden. Dadurch kann die Genauigkeit der Positionsdaten verbessert und es können dadurch Zuordnungsfehler verringert werden.

Zur zusätzlichen Verbesserung der Genauigkeit ist es günstig, wenn die ermittelten und gegebenenfalls korrigierten Positionsdaten gefiltert werden, wobei die Kontinuität zeitlich aufeinander folgender Positionen auf Basis der Historie und/oder Berücksichtigung weiterer Sensordaten von Inertialgeber, Beschleunigungssensor, Winkelgeber, Inklinometer, Kompassrichtung und Beschleunigung überprüft wird und Positionsdaten mit Abweichungen oberhalb eines vordefinierten Schwellwerts verworfen (und keinem Rasterpunkt zugeordnet) werden. D.h. es kann ausgehend von einer bekannten früheren Position und Bewegungsrichtung eines Fahrzeugs die Plausibilität einer späteren Position überprüft und die spätere Position bei zu großen Abweichungen von einer vorhergesehenen Position verworfen werden. Mit anderen Worten findet ein Vergleich zweier in der Zeitdomäne aufeinanderfolgenden Positionsinformationen auf Plausibilität in Bezug auf Distanz der zwei Positionsmeldungen unter Berücksichtigung der gemeldeten Geschwindigkeit und bei Verfügbarkeit die Hinzunahme weiterer Sensorinformationen wie Inertialgeber, Winkelgeber, der Auswertung der Kompassrichtung, Beschleunigungen und historischen Daten statt. Derartige Filter können lokal und/oder zentral vorgesehen sein.

Insbesondere für eine genaue Darstellung von Fahrzeugen in einem Gleismodell ist es vorteilhaft, wenn der Empfänger die eigene Position relativ zu einem Schienenfahrzeug erkennt und zur Korrektur der erfassten Positionsdaten verwendet. Die Erkennung der eigenen Position kann z.B. durch Auswertung eines Magnet-und Beschleunigungssensors erfolgen, welche beispielsweise bei Kurvenfahrten je nach Position am Fahrzeug unterschiedliche charakteristische Messwerte liefern.

Weiters hat es sich als vorteilhaft herausgestellt, wenn der Empfänger zwischen einem Vermessungsbetrieb, in dem die erfassten Positionsdaten zur Rekonstruktion des digitalen Gleisplans verwendet werden, und einem Ortungsbetrieb, in dem die erfassten Positionsdaten nicht zur Rekonstruktion des digitalen Gleisplans verwendet werden, umschaltbar ist. Insbesondere kann der Vermessungsbetrieb beim Verlassen eines vordefinierten Bewegungsgebiets, welches im Wesentlichen der Fläche der Gleisanlage entspricht, deaktiviert werden. Umgekehrt kann der Vermessungsbetrieb optional beim Eintritt in das vordefinierte Bewegungsgebiet auch wieder aktiviert werden. Diese, an das Konzept des "Geofencing" angelehnte, Vorgehensweise ermöglicht einen energiesparenden Betrieb der Positionsempfänger, ohne die Genauigkeit der Positionsdaten zur Ermittlung des Gleisplans zu kompromittieren. Zusätzliche Betriebsmodi können einen oder mehrere der folgenden umfassen: Standby-Betrieb ohne Messbetrieb, wobei Systemkomponenten bis auf Wakeup-Sensoren (z.B. ein Zeitgeber) inaktiv sind; Ladebetrieb, wobei das System nur über die verfügbaren Ladequellen geladen wird; Lageerlernung, wobei ein autonomes "Lernen" der Lage des Empfängers auf einem Schienenfahrzeug durch Auswertung der Lage im Raum durch Auswertung von GNSS, Inklinometer, Beschleunigungssensoren und elektronischen Kompass unter Berücksichtigung der konfigurierten Parameter - speziell die Beschreibung der Geometrie des Fahrzeugs - durchgeführt wird.

Im folgenden werden bevorzugte Ausführungsformen des erfindungsgemäßen Verfahrens, Computersystems und Computerprogramms sowie bevorzugte Kombinationen davon und einige besonders bevorzugte Anwendungen davon definiert:
1. Verfahren zur Erstellung eines digitalen Gleisplans einer Gleisanlage (einschließlich eines Schienenverlaufs, Bahnhofs, Rangierbahnhofs, Containerterminals, einer Hafenanlagen oder einer Schienenanlagen auf Forstwegen oder im Tagebau) umfassend die folgenden Schritte:
   - Zuordnen von mit einem Empfänger für satelliten- und/oder landgestützten Positionssignale erfassten Positionsdaten zu jeweils einem Punkt in einem Raster, welches die Fläche der Gleisanlage überspannt, wobei für jeden Punkt des Rasters die Anzahl der jeweils zugeordneten Positionsdaten ermittelt wird; und
   - Rekonstruieren eines digitalen Gleisplans, insbesondere umfassend Erkennen von Gleisobjekten und Rekonstruieren zumindest eines Gleisverlaufs, aus mehreren Punkten des Rasters unter Berücksichtigung der jedem Punkt zugeordneten Anzahl von erfassten Positionsdaten.
2. Verfahren zur Erstellung eines digitalen Gleisplans einer Gleisanlage (einschließlich eines Schienenverlaufs, Bahnhofs, Rangierbahnhofs, Containerterminals, einer Hafenanlagen oder einer Schienenanlagen auf Forstwegen oder im Tagebau) umfassend die folgenden Schritte:
   - Erfassen von Positionsdaten mit einem Empfänger für satelliten- und/oder landgestützten Positionssignale;
   - Zuordnen der erfassten Positionsdaten zu jeweils einem Punkt in einem Raster, welches die Fläche der Gleisanlage überspannt, wobei für jeden Punkt des Rasters die Anzahl der jeweils zugeordneten Positionsdaten ermittelt wird; und
   - Rekonstruieren eines digitalen Gleisplans, insbesondere umfassend Erkennen von Gleisobjekten und Rekonstruieren zumindest eines Gleisverlaufs, aus mehreren Punkten des Rasters unter Berücksichtigung der jedem Punkt zugeordneten Anzahl von erfassten Positionsdaten.
3. Verfahren nach Ausführungsform 1 oder 2, wobei die erfassten Positionsdaten jenem Punkt des Rasters zugeordnet werden, der den kleinsten geometrischen Abstand von der den Positionsdaten entsprechenden Position auf der Fläche der Gleisanlage aufweist.
4. Verfahren nach Ausführungsform 3, wobei jedem Punkt des Rasters ein Zähler zugeordnet ist, welcher mit jedem zugeordneten Positionsdatum inkrementiert wird.
5. Verfahren nach einer der Ausführungsformen 1 bis 3, wobei beim Rekonstruieren des digitalen Gleisplans Bereiche mit Gleisverzweigungen erkannt werden und die verbindenden Gleisabschnitte durch Anpassung von nicht-verzweigten Gleisobjekten rekonstruiert werden.
6. Verfahren nach Ausführungsform 5, wobei Punkte des Rasters mit einer höheren zugeordneten Anzahl von Positionsdaten bei der Anpassung ein größeres Gewicht haben, sodass das angepasste Gleisobjekt zwischen zwei unterschiedlich gewichteten Punkten näher bei dem Punkt mit dem größeren Gewicht angeordnet ist.
7. Verfahren nach einer der Ausführungsformen 1 bis 6, wobei die Zuordnung der Positionsdaten während der Erfassung erfolgt.
8. Verfahren nach einer der Ausführungsformen 1 bis 7, wobei die Positionsdaten von dem Empfänger an ein zentrales Service übermittelt werden, wobei zumindest die Rekonstruktion des digitalen Gleisplans von dem zentralen Service durchgeführt wird.
9. Verfahren nach einer der Ausführungsformen 1 bis 8, wobei Positionsdaten von zwei oder mehr Empfängern empfangen und in einem gemeinsamen Raster zusammenführt werden.
10. Verfahren nach Ausführungsform 8 oder 9, wobei die Positionsdaten von dem Empfänger drahtlos, z.B. über WiFi, ZigBee, NFC, GSM oder ISM, an das zentrale Service übermittelt werden.
11. Verfahren nach einer der Ausführungsformen 1 bis 10, wobei das Raster an den erstellten digitalen Gleisplan derart angepasst wird, dass eine gleichmäßige geometrische Verteilung der Punkte des Rasters entlang der Gleisobjekte und/oder eine höhere Dichte von Punkten in Bereichen von Gleisobjekten als in Bereichen ohne Gleisobjekte erzielt wird.
12. Verfahren nach einer der Ausführungsformen 1 bis 11, wobei bei der Rekonstruktion des digitalen Gleisplans Vorgaben zu den vorhandenen Gleisobjekten, insbesondere Arten und Anzahl der vorhandenen Kreuzungselemente, berücksichtigt werden.
13. Verfahren nach einer der Ausführungsformen 1 bis 12, wobei die Rekonstruktion zusätzlich zu den Punkten des Rasters einen oder mehrere vordefinierte Referenzpunkte berücksichtigt, welche die Position von Gleiselementen markieren.
14. Verfahren nach einer der Ausführungsformen 1 bis 13, wobei auf Basis des rekonstruierten digitalen Gleisplans ein topologisch verzerrtes, vollständiges, unmaßstäbliches Gleismodell der Gleisanlage ermittelt wird und für die Punkte des Rasters Abbildungsparameter ermittelt und gespeichert werden, die einer Abbildung der Punkte in dem Gleismodell entsprechen.
15. Verfahren nach einer der Ausführungsformen 1 bis 14, wobei zusätzlich zur Erfassung von Positionsdaten mit dem Empfänger Positionskorrekturdaten (z.B. gemäß dem dGNSS-Verfahren) empfangen werden und die Positionsdaten auf Basis der empfangenen Positionskorrekturdaten korrigiert werden bevor die korrigierten Positionsdaten für die Zuordnung in dem Raster verwendet werden.
16. Verfahren nach einer der Ausführungsformen 1 bis 15, wobei die ermittelten und gegebenenfalls korrigierten Positionsdaten gefiltert werden, wobei die Kontinuität zeitlich aufeinander folgender Positionen auf Basis der Historie und/oder Berücksichtigung weiterer Sensordaten von Inertialgeber, Beschleunigungssensor, Winkelgeber, Inklinometer, Kompassrichtung und Beschleunigung überprüft wird und Positionsdaten mit Abweichungen oberhalb eines vordefinierten Schwellwerts verworfen werden.
17. Verfahren nach einer der Ausführungsformen 1 bis 16, wobei der Empfänger die eigene Position relativ zu einem Schienenfahrzeug erkennt und zur Korrektur der erfassten Positionsdaten verwendet.
18. Verfahren nach einer der Ausführungsformen 1 bis 17, wobei der Empfänger zwischen einem Vermessungsbetrieb, in dem die erfassten Positionsdaten zur Rekonstruktion des digitalen Gleisplans verwendet werden, und einem Ortungsbetrieb, in dem die erfassten Positionsdaten nicht zur Rekonstruktion des digitalen Gleisplans verwendet werden, umschaltbar ist.
19. Verfahren nach Ausführungsform 18, wobei der Vermessungsbetrieb beim Verlassen eines vordefinierten Bewegungsgebiets, welches im Wesentlichen der Fläche der Gleisanlage entspricht, deaktiviert wird.
20. Computersystem zur Erstellung eines digitalen Gleisplans einer Gleisanlage, umfassend:
   - Zuordnungsmittel zum Zuordnen von empfangenen, insbesondere mit einem Empfänger für satelliten- und/oder landgestützten Positionssignale erfassten, Positionsdaten zu jeweils einem Punkt in einem Raster, welches die Fläche der Gleisanlage überspannt, wobei für jeden Punkt des Rasters die Anzahl der jeweils zugeordneten Positionsdaten ermittelt wird; und
   - Rekonstruktionsmittel zum Rekonstruieren eines digitalen Gleisplans aus mehreren Punkten des Rasters unter Berücksichtigung der jedem Punkt zugeordneten Anzahl von erfassten Positionsdaten.
21. Computerprogrammprodukt zur Erstellung eines digitalen Gleisplans einer Gleisanlage, gespeichert auf einem Computer-verwendbaren Medium, umfassend:
   - Zuordnungsmittel zum Zuordnen von empfangenen, insbesondere mit einem Empfänger für satelliten- und/oder landgestützten Positionssignale erfassten, Positionsdaten zu jeweils einem Punkt in einem Raster, welches die Fläche der Gleisanlage überspannt, wobei für jeden Punkt des Rasters die Anzahl der jeweils zugeordneten Positionsdaten ermittelt wird; und
   - Rekonstruktionsmittel zum Rekonstruieren eines digitalen Gleisplans aus mehreren Punkten des Rasters unter Berücksichtigung der jedem Punkt zugeordneten Anzahl von erfassten Positionsdaten.
22. Computerprogramm, das direkt in den internen Speicher eines digitalen Computer geladen werden kann und Softwarecodeabschnitte umfasst, mit denen die Schritte nach einer der Ausführungsformen 1 bis 19 ausgeführt werden, wenn das Computerprogramm auf einem Computer läuft.
23. Verwendung eines Verfahrens nach einer der Ausführungsformen 1 bis 11 oder eines Computersystems gemäß Ausführungsform 12, zur Sammlung von Positionsdaten mit einem auf einem Schienenfahrzeug angebrachten Empfänger im Normalbetrieb des Schienenfahrzeugs zumindest über einen Zeitraum, welcher zur Generierung einer zur Erstellung eines digitalen Gleisplans erforderlichen Datenmenge an Positionsdaten ausreicht.
24. Verwendung eines gemäß dem Verfahren nach einer der Ausführungsformen 1 bis 11 oder mit einem Computersystems gemäß Ausführungsform 12 erstellten Gleisplans zur Ermittlung von Abweichungen zwischen der Ist-Lage der Gleisanlage und der Soll-Lage aus der Planung der Gleisanlage.
25. Verwendung eines gemäß dem Verfahren nach einer der Ausführungsformen 1 bis 11 oder mit einem Computersystems gemäß Ausführungsform 12 erstellten Gleisplans zur direkten und automatisierten Übernahme und Steuerung von Gleisbaufahrzeugen, insbesondere zur Stopfung und/oder Nivellierung der Gleisanlage.
26. Verwendung eines gemäß dem Verfahren nach einer der Ausführungsformen 1 bis 11 oder mit einem Computersystems gemäß Ausführungsform 12 erstellten Gleisplans für die automatisierte Kurz- oder Langzeit-Dokumentation der Gleisanlagen.
27. Verwendung eines gemäß dem Verfahren nach einer der Ausführungsformen 1 bis 11 oder mit einem Computersystems gemäß Ausführungsform 12 erstellten Gleisplans zur Ableitung von Bewegungsmustern und Zeittrajektorien zur Ermittlung der Leistungserbringung und bzw. oder Optimierungsaufgaben im Zusammenhang mit der Gleisanlage.

Die Erfindung wird nachfolgend anhand besonders bevorzugter Ausführungsbeispiele, auf die sie jedoch nicht beschränkt sein soll, und unter Bezugnahme auf die Zeichnungen noch weiter erläutert. Dabei zeigt im Einzelnen:
Fig. 1 eine schematische Darstellung eines Systems zur Erfassung von Positionsdaten und zur Erstellung eines digitalen Gleisplans einer Gleisanlage;
Fig. 2 schematisch eine Zuordnung von Positionsdaten zu einer quadratischen Rasterzelle;
Fig. 3 schematisch den Aufbau eines quadratischen Rasters;
Fig. 4 schematisch eine Zuordnung von Positionsdaten zu einer bestimmten Zelle eines quadratischen Rasters;
Fig. 5 schematisch die Rekonstruktion eines Gleisplans auf Basis eines quadratischen Rasters, wobei jeder Rasterzelle eine Anzahl von Positionsdaten (dargestellt durch den Farbton) zugeordnet ist;
Fig. 6 schematisch die Erkennung von Gleisobjekten innerhalb des rekonstruierten Gleisplans gemäß Fig. 5; und
Fig. 7 schematisch eine Umrechnung und Abbildung des gemäß Fig. 6 ergänzten Gleisplans in ein topologisch verzerrtes Gleismodell.

Das vorliegende Verfahren wird als Teil eines bevorzugten Anwendungsbeispiels im Folgenden vereinfacht dargestellt und beschrieben.

Gemäß diesem Anwendungsbeispiel werden Ortungsinformationen für folgende Ergebnisse verwertet:
A. Zur Vermessung von Gleisanlagen mit einer Genauigkeit einer geodätischen Vermessung durch Generierung und Erfassung qualitätsgesicherter Positionsdaten von einer Onbordunit (d.h. einer lokal auf einem Fahrzeug angebrachten Ortungseinrichtung) aus dem laufenden Tagesbetrieb;
B. Darauf basierend die Generierung hochgenauer elektronischer Karten in Raster und/oder Vektorformat;
C. Weiters darauf basierend die Identifikation von Objekten nach Vorgabekriterien, im Wesentlichen die Identifikation von Einbauten in Eisenbahnanlagen (Gleise, Weichen, etc.);
D. Darauf basierend die Erweiterung der Objektbeschreibungen durch Anwendungsbezogene Attribute wie etwa Gleisnummerierung, Bezeichnungen, Neigungen, Befahrungshinweise, Nutzlänge, etc.;
E. Darauf basierend die Generierung eines digitalen und geodätisch unabhängigen digitalen Gleismodells durch Anwendung entsprechender Abbildungsvorschriften die die Position von unter C und D generierten Objekten von der realen Welt in ein digitales Modell überführt;
F. Darauf basierend die hochgenaue Darstellung von Positionen von Schienen- und anderen Fahrzeugen in Echtzeit auf elektronischen Karten gemäß Punkt B (Raster-/Vektorkarte) und Punkt E (Gleismodell) wobei in ersterem Fall die Position in Form einer Geokoordinate angewendet wird, im zweiten Fall eine aus der geodätischen Positionsangabe auf des Gleismodell abgebildete virtuelle Position in Relation zu einem im digitalen Gleismodell für jedes Objekt definierten Referenzpunkt errechnet wird.

Die Vorteile des Verfahrens sind:
- Erstellung von Kartenmaterial aus der Ist-Situation ohne Zuhilfenahme von öffentlich verfügbarem Kartenmaterial aus dem Internet, dessen Aktualität nicht gewährleistet wird und mit reduziertem Einfluss auf den laufenden Betrieb oder Inanspruchnahme kostenintensiver geodätischer Hilfsdienste; und
- Genauere Steuerung von Industrie- und Logistikprozessen (z.B. Ladeoptimierung) in Abhängigkeit der aktuellen Ist-Position eines Schienenfahrzeugs und unter Vergleich mit Vorgaberichtlinien (Ladeauftrag, Produktionssteuerung).

Der digitale Input in Form von gemessenen Ortungsinformationen wird dabei derart umgewandelt, dass daraus eine genauere und vereinfachte Darstellung der Position des Fahrzeuges in einem digitalen Modell erfolgt.

Die hier beschriebene Anwendung besteht aus einer Gruppe von Funktionsmodulen auf einer Hardwareeinheit 2 am (Schienen-) Fahrzeug (als "Onbordunit" bezeichnet), welche über eine intelligente Kommunikation mit Funktionsmodulen auf einem Host 3 Informationen austauschen. Die Onbordunit 2 wird dabei in einem operativ-innovativen Ansatz auf einem Eisenbahnfahrzeug temporär befestigt ohne das Modifikationsarbeiten am Schienenfahrzeug notwendig werden. Es wird dabei von einer den Anforderungen genügenden Hardwareplattform ausgegangen. Die Kombination und das Zusammenspiel der einzelnen Funktionsmodule nimmt bei dem hier gezeigten Ausführungsbeispiel eine Übersetzung von gemessenen Positionsdaten in einen digitalen Gleisplan vor. Die Ergebnisse (d.h. der erstellte Gleisplan) werden online und kontinuierlich an eine Ergebnisverwertung übermittelt, welche sie zum Beispiel für die präzise Steuerung eines Industrie- und/oder Logistikprozesses nutzt.

Die Funktionsmodulgruppe 2 am Onbordsystem kann folgende Funktionen übernehmen:
- Vermessungsbetrieb ("Surveillance"): Ermittlung einer hochgenauen Verortung zur Vermessung der Gleislagen innerhalb der Gleisanlage; und/oder
- Ortungsbetrieb ("Tracking"): Genaue Verortung der aktuellen Position eines mit dem Ortungssystem ausgestatteten Schienenfahrzeugs im Verschub- oder Streckenbetrieb.

Die Ortungsdaten eines (z.B. satellitenbasierenden GNSS) Ortungsdatenproviders werden über die Schnittstelle 2a kontinuierlich empfangen (z.B. von einem externen GPS-Empfänger) und im Submodul 2.1 ausgewertet. Diese Ortungsinformationen ("GNSS-Rohdaten") werden durch ebenfalls kontinuierlich über die Schnittstelle 2b empfangene Korrekturinformationen eines Korrekturdatenproviders durch das Funktionsmodul 2.2 aufbereitet und über das Steuermodul 2.3 dem Ortungsdatenmodul 2.1 zugeführt. Über die Wechselwirkung der Module 2.1 und 2.3 werden die vom Ortungsprovider zur Verfügung gestellten Informationen zu hochgenauen Positionsinformationen verbessert. Es können dabei zwei "Genauigkeiten" gewählt werden:
"Genau" mit einer Auflösung im Dezimeterbereich (d.h. die erfasste Position liegt mit einer Wahrscheinlichkeit von mehr als 90% innerhalb einer Abweichung von weniger als 10dm von der tatsächlichen geodätischen Position des Empfängers. Diese Genauigkeit wird im weiteren für das Tracking von Fahrzeugen und der Zuordnung der Position zu einzelnen Gleisen verwendet.

"Surveillance" oder "Vermessung" mit einer Auflösung im Zentimeterbereich (mit einer erlaubten Abweichung von wenigen cm bis in den mm Bereich).

Die Auswahl der Positionsgenauigkeit erfolgt durch Steuerbefehle, welche von einer entfernten Steuerungskonsole 5 über Fernwirkkommunikation über die Schnittstelle 2d an die Onbordunit 2 Übermittelt werden, durch das Modul 2.5 ausgewertet und im Modul 2.3 entsprechend eingesetzt werden. Über diese Fernwirkschnittstelle kann die Onbordunit 2 generell komplett konfiguriert und kontrolliert werden.

Die so ermittelten geodätischen Ortungsinformationen werden vom Funktionsmodul 2.4 aufbereitet und über die Schnittstelle 2c an eine Ferndatenübertragung weitergegeben. Diese Ferndatenübertragung stellt eine logische Verbindung zwischen der Onbordunit 2 und einem zentralen Service (Host) 3 dar.

Die Onbordunit 2 ist dabei als mobil einsetzbare Hardwareeinheit implementiert, welche von einem Fahrzeug, auf dem sie angebracht ist, vollkommen autark sein kann. Dazu sind die Funktionsmodule der Onbordunit 2 in Hinblick auf minimalen Energieverbrauch optimiert und werden entsprechend betrieben. Weiters umfasst die Onbordunit 2 eine autarke Energieversorgung die sich auf eine interne Batterie stützt, welche sowohl eigenständig über Alternativenergiequellen wie Solarzelle, Peltiegenerator und Bewegungsenergiesammler oder ähnlichen Quellen im Gerät selber laden kann, oder über eine Ladequelle 2e von außen geladen wird. Das Funktionsmodul 2.6 übernimmt hierbei das Energiemanagement und stellt eine maximale Verfügbarkeit des Systems sicher.

In Erweiterung zu herkömmlichen Ortungssystemen umfasst das beschriebene System auch weitere Inertialsensoren wie einen 3-Achs-Beschleunigungssensor, einen Magnetsensor und einen 2-Achs-Lagesensor, die weitere Informationen zur tatsächlichen Lage des Onbordsystems 2 im Raum und in Relation zum Trägerfahrzeug liefern. Aus diesen Informationen wird die genaue Verortung der Onbordunit 2 am Schienenfahrzeug abgeleitet (wo am Fahrzeug, d.h. Lage zur Mittenachse, u.a.) und im Weiteren auch Inputs für das Energiemanagement geliefert (z.B. Ableitung von Stillstandszeiten, Energiereduktion, Wakeup-Situationen, u.a.).

Die Funktionsmodule des zentralen Services 3 übernehmen folgende Funktionen:
Das Funktionsmodul 3.1 empfängt die von einem oder mehreren Onbordunits 2 übermittelten Ortungsdaten über die Schnittstelle 3a und führt diese Daten je nach Systemkonfiguration einem Tracking Modul 3.2 oder einem Surveillance Modul 3.3 zu.

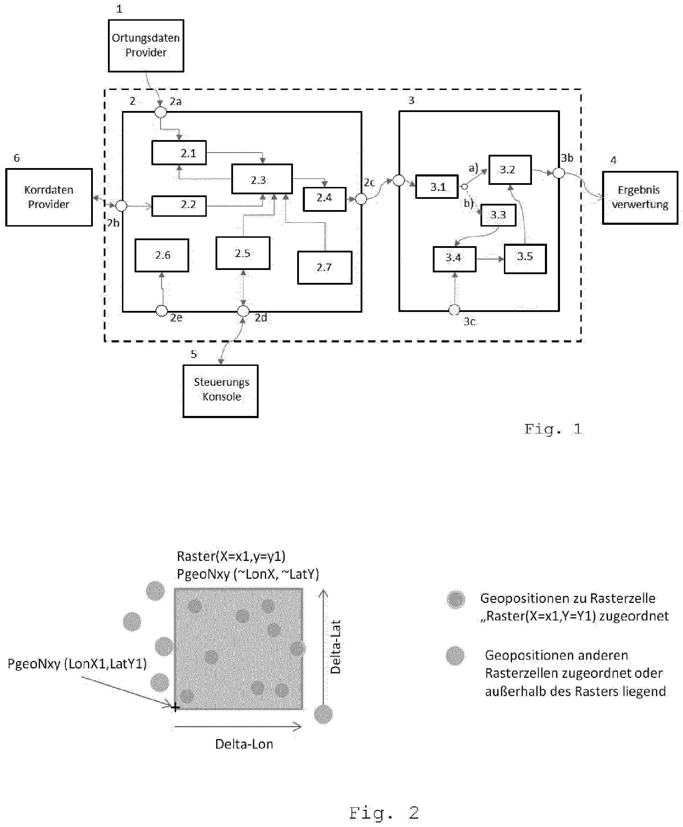

Dem Surveillancemodul 3.3 werden Ortungsinformationen der Genauigkeit "Vermessung" zugeführt und dort lokal gespeichert. Das Modul 3.4 führt nun eine Übertragung der gemessenen (geodätischen) Ortungsinformationen in ein Raster aus einzelnen punktartigen Positionsinformationen durch. Aus dem Raster werden im Weiteren anschließend Linien- und Polygonzüge entsprechend der vermessenen Gleisanlage ermittelt. Die Fig. 2, 3 und 4 stellen eine spezielle Ausführungsform des dabei eingesetzten Verfahrens genauer dar.

Die geografisch abzudeckende Fläche der Gleisanlage wird dabei gerastert und z.B. in einzelne aneinandergereihte quadratische Zellen unterteilt. Jede Zelle ist durch ihre Abmessungen relativ zu einem Punkt in einer Ecke oder in der Mitte der Zelle bestimmt. Die ebenfalls frei wählbare Ausdehnung der Zelle "Delta-Lon" für X-Richtung und "Delta-Lat" für die Y-Richtung entspricht der "Auflösung" in Bogengrad oder einer Längeneinheit (z.B. [m]). Die Zuordnung eines auf einem Fahrzeug erfassten Positionsdatums erfolgt durch Berechnung der Differenzen zwischen dem Positionsdatum und dem der Zelle zugeordneten Punkt (entsprechend ihrer Geoposition). Wird dabei festgestellt, dass die Geoposition innerhalb der durch die Zelle definierten Fläche liegt, wird diese Positionsmeldung dieser Zelle zugeordnet (vgl. Fig. 2). Auf diese Weise kann jedes Positionsdatum einer oder mehreren Zellen zugeordnet werden (z.B. wenn die Flächen der Zellen überlappen). Alternativ kann es nur einer Zelle zugeordnet werden, deren Mittelpunkt geometrisch am nächsten liegt.

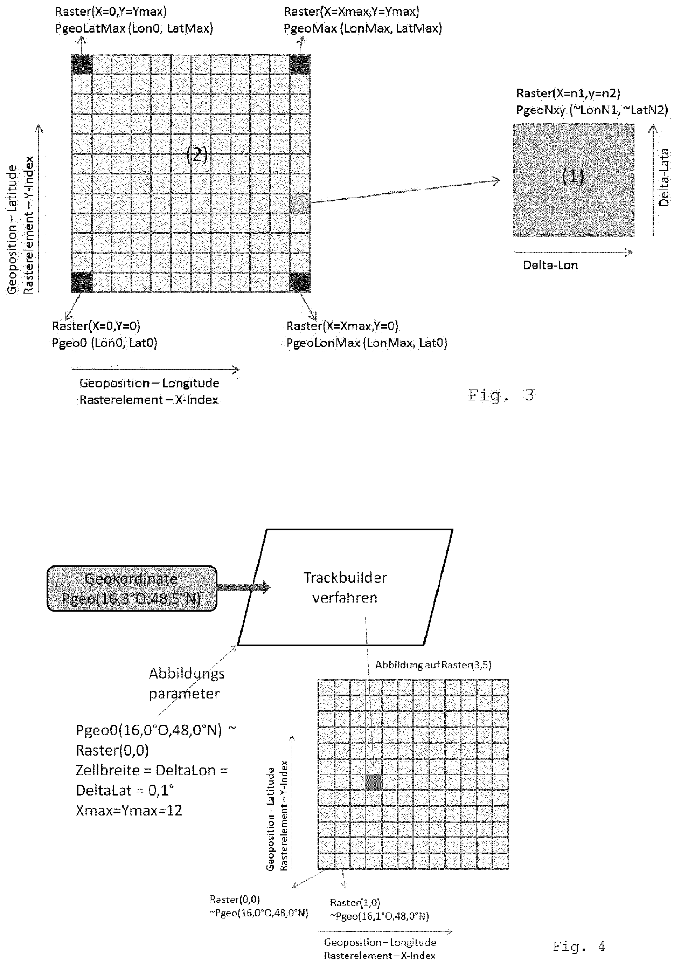

Das Verfahren wird nun dergestalt erweitert, dass je nach abzudeckender Fläche eine beliebige, dem Ergebniszweck dienliche Anzahl von Zellen in einem Raster in X-Richtung (entspricht dem Längengrad) und Y-Richtung (entspricht dem Breitengrad) aneinandergereiht werden (vgl Fig. 3).

Die Rasterzelle mit Index(0,0) wird dabei z.B. als "Nullkoordinatenzelle" festgelegt. Die Ausrichtung der X-Achse folgt der West-Ost Richtung, die der Y-Achse der Nord-Süd Richtung. Die Zellgrößen können beispielsweise äquidistant (bestimmter Betrag eines Bogenwinkels) oder flexibel (entsprechend der geografischen Lage) festgelegt werden. Die von dem Raster überspannte (d.h. abgedeckte) geografische Fläche ergibt sich aus der Anzahl der Zellen in X bzw. Y-Richtung und die dabei summierten Delta-Lon- bzw. Delta-Lat-Größen (d.h. die Zellenabmessungen).

Für die weiteren Schritte erfolgt nun die Sammlung einer ausreichend großen Anzahl an punktförmigen Ortungsinformationen vorzugsweise aber nicht unbedingt der Klasse "Vermessung" durch kontinuierliche Sammlung von entsprechenden Ortungsinformationen, welche von Fahrzeugen mit Onbordunits gesendet werden.

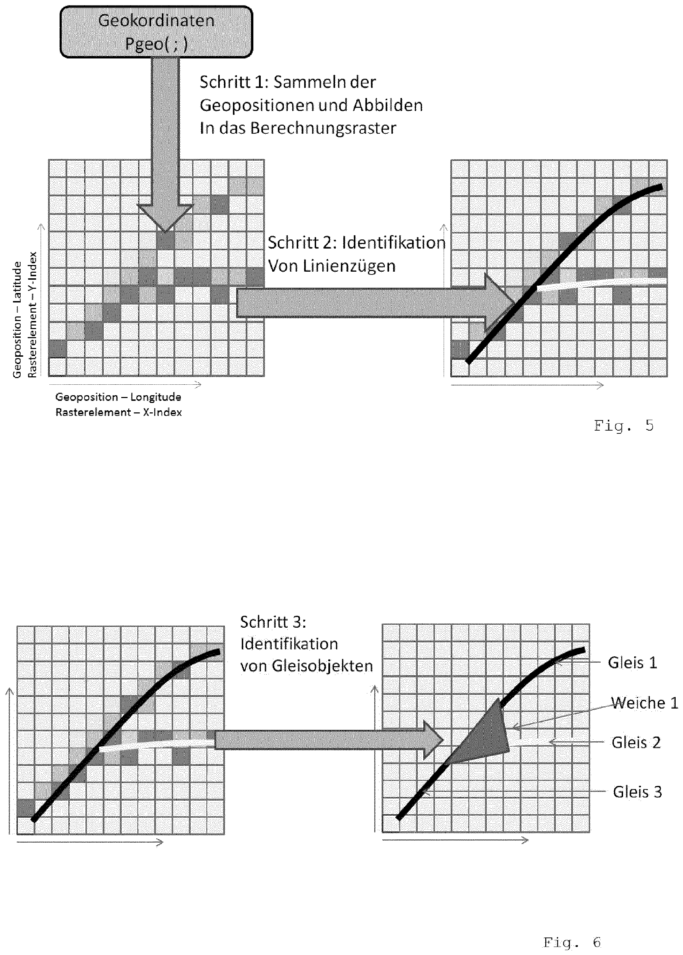

Das vorliegende Verfahren kann gemäß dem hier beschriebenen Ausführungsbeispiel auf Basis einer ausreichenden Anzahl von Ortungsinformationen, die von der Onbordunit 2 gesendet wurden, mittels statistischer Verfahren (Mittelwertbildung, Varianzanalyse, Sequenzfolgeanalyse) zur Erkennung und zum Unterdrücken von Ausreißern und Artefakten und mittels Verfahren der Linien- und Objekterkennung aus dem Fachbereich der Bildverarbeitung, mit denen auf Basis der rasterförmigen Punktinformationen entsprechende Objekte wie Gleise (Linienzüge), Weichen (Treffpunkt von 3 Linienzügen), Doppelkreuzungsweichen (Treffpunkt von 4 Linienzügen) oder andere Objekte erkannt und extrahiert werden können, einen Gleisplan rekonstruieren. Fig. 4 zeigt den Ablauf der Zuordnung der Positionsdaten in das Raster, Fig. 5 und 6 zeigen die jeweiligen Schritte der Verarbeitung.

Zur Zuordnung der Positionsdaten werden die von der Onbordunit 2 einlangenden Positionsdaten im Funktionsmodul 3.3 in ein X-Y Raster abgebildet. Das Raster entspricht einem 2-dimensionalen Feld mit sogenannten "X-Y-Zellen" die - zum einfacheren Verständnis - jeweils einem Pixel eines Bildes entsprechen. Der Ursprung des Rasters P(0,0) entspricht dabei einer frei wählbaren Geokoordinate. Die Zählrichtung der Indizes erfolgen vom Ursprung waagrecht entsprechend dem Längengrad und senkrecht entsprechend dem Breitengrad. Jede Zelle ist als Datenstruktur ausgebildet, die weitere Eigenschaften der Zelle sowie einen oder mehrere Zähler umfasst. Beispielsweise können unterschiedliche Zähler für Positionsdaten unterschiedlicher Genauigkeit verwendet werden, wobei der Zähler der genaueren Positionsdaten im weiteren Verfahren höher gewichtet wird. Zusätzlich zu anderen Informationen zur Genauigkeit kann dabei eine Angabe der Anzahl der GNSS -Satelliten die zur Positionsberechnung herangezogen wurden (HDOP, PDOP-Wert) berücksichtigt werden.

Jeder Referenzpunkt einer Zelle des Rasters (entweder Mittelpunkt oder ein Eckpunkt) entspricht in diesem Ausführungsbeispiel einer bestimmten Geokoordinate, die sich aus der Geokoordinate des Referenzpunktes der Zelle P(0,0) - des Raster-Ursprungs und dem X bzw. Y-Index der Zelle multipliziert oder summiert mit der jeweiligen x bzw y-Ausdehnung der Zelle berechnet. Alternativ kann jeder Zelle ein bestimmter Punkt entsprechend einer bestimmten Geokoordinate zugeordnet sein, wodurch beliebige Rasteranordnungen erzielbar sind. Optional kann zusätzlich die Zellausdehnung, gegebenenfalls voneinander unabhängig für zwei Dimensionen, bestimmt sein. Jede Positionsmeldung wird nun über deren Geokoordinate Pgeo(lon,lat) einer Zelle und damit einem Punkt des Rasters wie beschrieben zugeordnet. Ist die Zelle identifiziert, wird entsprechend der Datenqualität und des Betriebsmodus ein bestimmter Zähler in der Zellstruktur um eins hochgezählt. Die Zellstruktur besitzt zumindest einen Zähler der bei jeder zugeordneten Positionsmeldung um eins (1) hochgezählt wird.

Zur Vermessung der Gleisanlage können die von einer oder mehreren Onbordunits 2 erfassten Positionsdaten über einen längeren Zeitraum gesammelt und entsprechend dem Raster(x,y) zugeordnet werden. Zur weiteren Verarbeitung unter Verwendung von bekannten Methoden der Bildverarbeitung und zur automatischen Erkennung von Gleisobjekten, kann das Raster in eine Pixelmatrix überführt werden, in welcher die einzelnen Zellen als Bildpunkte eines Bildes behandelt werden und die Zählerstände der für die weitere Bearbeitung gewählten Zähler als Farbinformation des jeweiligen Bildpunktes dienen. Die Abbildung von Pixel auf die Geokoordinate bleibt dabei durch die bei der Definition des Rasters und die den Zuordnungen der Zellen zu Geokoordinaten entsprechenden Abbildungsvorschriften erhalten. Die von der Onbordunit 2 eingelangten Positionsdaten können auch durch zusätzliche Referenzpunkte (Vermessungspunkte) aus einer vorgegebenen Liste ergänzt werden (sodass die Zähler der den Referenzpunkten jeweils zugeordneten Rasterpunkten erhöht werden). Alternativ können solche Referenzpunkte auch zusätzlich zu den Punkten des Rasters erst bei der Rekonstruktion, z.B. als Randbedingungen einer Anpassung, einfließen.

Fig. 6 stellt schematisch die Vorgehensweise zur Identifikation von Linien, Polygonzügen und Gleisobjekten mithilfe von Methoden der Bilddatenverarbeitung aus dem dem Raster entsprechenden digitalen Bild dar. Im Einzelnen können dabei Methoden des Sharpening durch Einsatz von Filtern (Gauß, Sobel, Kirsch, Prewitt, adaptive Schärfefilter) und des Pattern-Recognition/Patternvergleichs (Objektseparation, Vergleich mit gleichgeformten Objekten, eventuell unter Anwendung von Vergrößerungsfaktoren, Drehung und Spiegelung) eingesetzt werden. Die Identifikation kann optional manuell unterstützt werden. Dazu kann beispielsweise ein "Edit-Modus" vorgesehen sein, in dem unterbrochene Linienzüge vervollständigt, oder (fehlerhafte) Punkte gelöscht, Kurvenbeginn und -ende sowie Wendepunkte identifiziert werden können. Kurven werden dabei wahlweise aus einer Folge aneinandergereihter gerade Vektoren gebildet, mittels Berechnung der Parameterpunkte "Bogenbeginn", "Bogenende" und "Radiusmittelpunkt" oder mittels Spline-Verfahren berechnet und rekonstruiert. Aus diesem Verfahren ergibt sich eine Liste von Objekten, die die Gleisanlage beschreiben und zusammen den digitalen Gleisplan bilden.

Nach der Überführung der Positionsdaten in den Gleisplan mit den Objekten "Schiene", "Weiche", "Doppelkreuzungsweiche" u.a. werden diese durch Zusatzinformationen über die Schnittstelle 3c kommend mit weiteren Eigenschaften versehen. Dies sind z.B. Gleisbezeichnungen, Betriebs- und Fahranweisungen, Nutzlängen, Sicherheitsbereiche u.a. Die Erweiterung mit Eigenschaften umfasst auch die Einbeziehung von Höhenangaben aus weiteren Vermessungsdaten oder Höhendatenbanken (z.B. SRTM) sowie Erstellung von Dateien zur Übergabe an weitere Logistik-Unterstützungsprogramme wie Tecnomatix, und andere. Jedes Gleisobjekt wird sowohl durch die Rücktransformation auf die zugeordneten Geokoordinaten als auch durch die zugeordneten Rasterkoordinaten bzw. Rasterpunkte selber bestimmt.

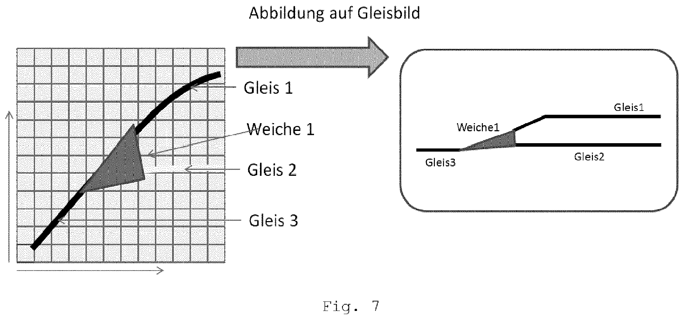

Aus diesen erweiterten Informationen erstellt nun das Funktionsmodul 3.5 ein vereinfachtes digitales Modell der Gleisanlage und besitzt die notwendigen Abbildungsverfahren um aus einer geodätischen Positionsinformation eine von der geodätischen Information vollkommen entkoppelte Positionsinformation in Relation zu einem virtuellen Modellelement im Gleismodell mit einer äquivalenten Distanz zu einem Bezugspunkt zu berechnen ("Gleisname"+"Gleisposition"). Durch entsprechende Parametrisierung über die Schnittstelle 3d und Anwendung von Abbildungsvorschriften wird nun ein für die Ergebnisverwertung optimale Umsetzung der realen Informationen auf ein idealisiertes 3-dimensionales Gleisbild vorgenommen. Die Darstellung kann dabei von analog der geodätischen Lage bis hin zu einer davon unabhängigen Gleisblockdarstellung (entsprechend dem Gleismodell) gehen (vgl Fig. 7). Dabei werden die Rasterpunkte (und damit implizit die zugeordneten Geokoordinaten) der einzelnen Gleisobjekte durch Koordinatentransformation wie Matrixtransformation sowie gegebenenfalls Stauchen und Spreizen auf ein dem Gleismodell entsprechendes Gleismodell-Koordinatensystem transformiert wobei die dabei entstehenden Verzerrungen der Längen dadurch kompensiert werden, dass eine Positionsangabe von der geografischen Form Pgeo (Längengrad, Breitengrad) auf eine Position auf einem Gleisobjekt in Abstand zu einem Referenzpunkt z.B. dem Beginn des Gleisobjekts "Gleisx" abgebildet wird. Das Ergebnis kann in Angabe einer Längeneinheit (z.b."23m von Referenzpunkt Gleis1") oder in Prozent bezogen auf die Gesamtlänge des Gleisobjekts erfolgen (z.B. "17% der Gleislänge Gleis1") ausgehend vom Referenzpunkt.

Im Funktionsmodul 3.2 erfolgt nun im Trackingbetrieb die Anwendung des Gleismodells aus 3.5 zur Umsetzung von im Genauigkeitsmodus "Tracking" einlangenden Positionsdaten einer oder mehrerer Onbordunits 2 in die Positionsinformationen "Gleisname" und "Gleisposition" im Gleismodell. Diese Abbildung kann in Echtzeit vorgenommen werden. Die so erstellte digitale Abbildung der Situation auf der Gleisanlage wird über die Schnittstelle 3b an die Ergebnisverwertung 4 weitergeleitet.

## Patentansprüche

1. Verfahren zur Erstellung eines digitalen Gleisplans einer Gleisanlage umfassend die folgenden Schritte:
- Zuordnen von mit zumindest einem Empfänger für satelliten- und/oder landgestützten Positionssignale erfassten Positionsdaten (Pgeo) zu jeweils einem Punkt (x,y) in einem Raster, welches die Fläche der Gleisanlage überspannt, wobei für jeden Punkt (x,y) des Rasters die Anzahl der jeweils zugeordneten Positionsdaten (Pgeo) ermittelt wird; und
- Rekonstruieren eines digitalen Gleisplans aus mehreren Punkten (x,y) des Rasters unter Berücksichtigung der jedem Punkt (x,y) zugeordneten Anzahl von erfassten Positionsdaten (Pgeo).

2. Verfahren nach Anspruch 1, **dadurch gekennzeichnet, dass** die Positionsdaten (Pgeo) jenem Punkt (x,y) des Rasters zugeordnet werden, der den kleinsten geometrischen Abstand von der den Positionsdaten (Pgeo) entsprechenden Position auf der Fläche der Gleisanlage aufweist.

3. Verfahren nach Anspruch 2, **dadurch gekennzeichnet, dass** jedem Punkt (x,y) des Rasters ein Zähler zugeordnet ist, welcher mit jedem zugeordneten Positionsdatum (Pgeo) inkrementiert wird.

4. Verfahren nach einem der Ansprüche 1 bis 3, **dadurch gekennzeichnet, dass** beim Rekonstruieren des digitalen Gleisplans Bereiche mit Gleisverzweigungen erkannt werden und die verbindenden Gleisabschnitte durch Anpassung von nicht-verzweigten Gleisobjekten rekonstruiert werden.

5. Verfahren nach Anspruch 4, **dadurch gekennzeichnet, dass** Punkte (x,y) des Rasters mit einer höheren zugeordneten Anzahl von Positionsdaten (Pgeo) bei der Anpassung ein größeres Gewicht haben, sodass das angepasste Gleisobjekt zwischen zwei unterschiedlich gewichteten Punkten näher bei dem Punkt mit dem größeren Gewicht angeordnet ist.

6. Verfahren nach einem der Ansprüche 1 bis 5, **dadurch gekennzeichnet, dass** die Zuordnung der Positionsdaten (Pgeo) während der Erfassung erfolgt.

7. Verfahren nach einem der Ansprüche 1 bis 6, **dadurch gekennzeichnet, dass** Positionsdaten (Pgeo) von zwei oder mehr Empfängern empfangen und in einem gemeinsamen Raster zusammenführt werden.

8. Verfahren nach einem der Ansprüche 1 bis 7, **dadurch gekennzeichnet, dass** das Raster an den erstellten digitalen Gleisplan derart angepasst wird, dass eine gleichmäßige geometrische Verteilung der Punkte des Rasters entlang der Gleisobjekte und/oder eine höhere Dichte von Punkten in Bereichen von Gleisobjekten als in Bereichen ohne Gleisobjekte erzielt wird.

9. Verfahren nach einem der Ansprüche 1 bis 8, **dadurch gekennzeichnet, dass** bei der Rekonstruktion des digitalen Gleisplans Vorgaben zu den vorhandenen Gleisobjekten, insbesondere Arten und Anzahl der vorhandenen Kreuzungselemente, berücksichtigt werden.

10. Verfahren nach einem der Ansprüche 1 bis 9, **dadurch gekennzeichnet, dass** die Rekonstruktion zusätzlich zu den Punkten des Rasters einen oder mehrere vordefinierte Referenzpunkte berücksichtigt, welche die Position von Gleiselementen markieren.

11. Verfahren nach einem der Ansprüche 1 bis 10, **dadurch gekennzeichnet, dass** auf Basis des rekonstruierten digitalen Gleisplans ein topologisch verzerrtes, vollständiges, unmaßstäbliches Gleismodell der Gleisanlage ermittelt wird und für die Punkte des Rasters Abbildungsparameter ermittelt und gespeichert werden, die einer Abbildung der Punkte in dem Gleismodell entsprechen.

12. Computersystem zur Erstellung eines digitalen Gleisplans einer Gleisanlage, umfassend:
- Zuordnungsmittel zum Zuordnen von empfangenen Positionsdaten (Pgeo) zu jeweils einem Punkt (x,y) in einem Raster, welches die Fläche der Gleisanlage überspannt, wobei für jeden Punkt (x,y) des Rasters die Anzahl der jeweils zugeordneten Positionsdaten (Pgeo) ermittelt wird; und
- Rekonstruktionsmittel zum Rekonstruieren eines digitalen Gleisplans aus mehreren Punkten (x,y) des Rasters unter Berücksichtigung der jedem Punkt zugeordneten Anzahl von erfassten Positionsdaten (Pgeo).

13. Computerprogramm, das direkt in den internen Speicher eines digitalen Computer geladen werden kann und Softwarecodeabschnitte umfasst, mit denen die Schritte nach einem der Ansprüche 1 bis 11 ausgeführt werden, wenn das Computerprogramm auf einem Computer läuft.

14. Verwendung eines Verfahrens nach einem der Ansprüche 1 bis 11 oder eines Computersystems gemäß Anspruch 12, zur Sammlung von Positionsdaten (Pgeo) mit einem auf einem Schienenfahrzeug angebrachten Empfänger im Normalbetrieb des Schienenfahrzeugs zumindest über einen Zeitraum, welcher zur Generierung einer zur Erstellung eines digitalen Gleisplans erforderlichen Datenmenge an Positionsdaten (Pgeo) ausreicht.
